# EUROPÄISCHE PATENTSCHRIFT

(11) **EP 0 846 599 B1**
(45) Veröffentlichungstag und Bekanntmachung des Hinweises auf die Patenterteilung: **17.10.2001**
(21) Anmeldenummer: 97121217.0
(22) Anmeldetag: 03.12.1997
(51) Int. Cl.: B60R 16/02

(54) **Fahrzeugdach mit Kabelverbindung**
Vehicle roof with cable connection
Toit de véhicule avec liaison à câble

(30) Priorität: 04.12.1996 DE 19650227
(43) Veröffentlichungstag der Anmeldung: 10.06.1998
(73) Patentinhaber: WEBASTO KAROSSERIESYSTEME GmbH, D-82131 Stockdorf (DE)
(72) Erfinder: Hertel, Johann, 82061 Neuried (DE); Schätzler, Walter, 82319 Starnberg (DE)
(74) Vertreter: Wiese, Gerhard

(56) Entgegenhaltungen:
- EP-A- 0 282 389
- DE-A- 3 614 880

## Beschreibung

Die Erfindung betrifft ein Fahrzeugdach mit einem verstellbaren Deckelelement, gemäß dem Oberbegriff des Anspruchs 1.

Ein solches gattungsgemäßes Fahrzeugdach ist beispielsweise aus der DE 36 14 880 A1 bekannt. Dabei wird ein Stromkabel mit zylindrischem Querschnitt verwendet, das zwischen seinen Befestigungsstellen auf eine mit einer Feder vorgespannte, dachfest oder deckelfest drehbar angebrachte Kabelrolle soweit als notwendig selbsttätig aufgerollt wird, um das Kabel zwischen den Befestigungpunkten straff zu halten.

Nachteilig bei einer solchen Anordnung ist, daß die Kabelrolle einen zusätzlichen Teileaufwand bedeutet, einen erhöhten Einbauraum beansprucht und ferner bei Bewegung des Deckelteils in aller Regel nicht klapperfrei funktioniert.

Die japanische Gebrauchsmuster 4-82908 offenbart eine Kabelführung an einem beweglichen Deckel, bei welcher ein Kabel an gelenkig miteinander verbunden Armen befestigt ist. Diese Lösung ist aufwendig, da sie zusätzliche Teile erfordert.

Aus JP 1-282021 A ist ein Fahrzeugdach mit einer deckelfesten Bürste bekannt, die einen Schleifkontakt aufweist, der entlang einer dachfesten Stromschiene läuft. Schleifkontakte unterliegen einem erhöhten Verschleiß und sind empfindlich gegen Verschmutzung. DE 38 30 484 A1 offenbart ein Fahrzeugdach mit einem in einer dachfesten Stromschiene geführten und zur Anlage an diese vorgespannten deckelfesten Gleitkontakt. Nachteilig bei dieser Lösung ist ebenfalls der unzuverlässige elektrische Kontakt, die Verschmutzungsanfälligkeit sowie der Verschleiß der mechanischen Teile.

DE 40 09 871 A1 und DE 40 20 655 C1 offenbaren eine Kontaktanordnung zwischen einem mit einem Solargenerator versehenen beweglichen Deckel und einem Dachrahmen, wobei ein elektrischer Kontakt nur punktuell in bestimmten Deckelstellungen hergestellt wird. Nachteilig dabei ist, daß eine elektrische Verbindung nicht unabhängig von der Deckelstellung besteht.

DE 43 40 013 A1 offenbart einen elektrischen Fensterheber, bei dem ein bewegliches Teil mittels eines daran befestigten Elektromotors an einer türfesten Zahnstange entlangbewegt wird. Die Stromzufuhr zu dem Motor erfolgt mittels einer flachbandartigen Stromzuführung, die zwischen zwei Befestigungspunkten in einer frei nach unten hängenden Schlaufe angeordnet ist, die je nach Stellung der Fensterscheibe mehr oder weniger gestreckt ausgebildet ist. Die Ebene der Stromzuführung ist parallel zu der Oberfläche der Fensterscheibe geführt. Eine frei nach unten hängende Schlaufe, die im Sichtschutzbereich der Türverkleidung liegt, kommt bei einem horizontal bewegbaren Schiebedachdeckel nicht in Betracht.

Eine weitere Anordnung mit einer flachbandartigen Stromzuführung für eine Schiebetür ist aus der EP 0282 389 A1 bekannt. Bei dieser wird das Flachbandkabel mittels einer zusätzlichen Feder unter einer Vorspannung gehalten, da das Kabel keinerlei Führung aufweist.

Es ist Aufgabe der vorliegenden Erfindung, ein Fahrzeugdach mit einer elektrischen Verbindung zwischen einem Deckelelement und dem übrigen Fahrzeug zu schaffen, welches die oben genannten Nachteile bekannter Anordnungen vermeidet und mittels dem eine zuverlässige, verschleißarme Kontaktierung bei niedriger Bauhöhe realisierbar ist.

Diese Aufgabe wird ausgehend von einem Fahrzeugdach mit den eingangs genannten Merkmalen durch die Merkmale des Patentanspruchs 1 gelöst. Dadurch, daß die elektrische Verbindung als Flachbandkabel ausgebildet ist, das in seiner Längsrichtung zwischen den Befestigungsstellen in der Seitenansicht U-förmig gebogen ist und in seiner Querrichtung zwischen den Befestigungsstellen im wesentlichen planar verläuft, und daß das Flachbandkabel bei einer Verstellung des Deckelelements einerseits an einer an dem Deckelelement vorgesehen Anlagefläche und andererseits an einer dachfesten Anlagefläche abrollt, ist eine zuverlässige, verschleißarme und kostengünstige Kontaktierung geschaffen.

Bei dieser erfindungsgemäßen Lösung ist insbesondere vorteilhaft, daß eine klapperfreie Kabelführung zu einem beweglichen Deckelelement bei geringen Bauhöhen auf einfache und kostengünstige Weise realisiert werden kann sowie daß das Kabel kontrolliert abrollen und so angeordnet werden kann, daß es bei geöffnetem Deckelelement nicht sichtbar ist. Vorteilhafte Ausgestaltungen der Erfindung sind den Unteransprüchen zu entnehmen.

In weiterer vorteilhafter Ausgestaltung der Erfindung ist vorgesehen, daß das Flachbandkabel entlang der Anlagefläche des Deckelelements und/oder der dachfesten Anlagefläche in Querrichtung geführt ist, wobei vorzugsweise das Flachbandkabel durch seitliche Anlage an jeweils einen von der Anlagefläche abstehenden Steg geführt ist. Dies erhöht auf einfache Weise die Zuverlässigkeit der Kabelführung.

In weiterer bevorzugter Ausführung ist vorgesehen, daß das Flachbandkabel mit einem weichen Material umspritzt ist oder aus einem weichen Trägermaterial besteht, um die Geräuschentwicklung zu minimieren.

Ferner ist bevorzugt vorgesehen, daß in das Flachbandkabel ferromagnetisches Material eingearbeitet ist und Magnete oder Magnetfolien an der Anlagefläche des Deckelelements und/oder der dachfesten Anlagefläche angebracht sind oder daß die Anlagefläche des Deckelelements und/oder die dachfeste Anlagefläche ferromagnetisches Material enthält und in das Flachbandkabel Magnete oder eine Magnetfolie eingearbeitet sind.

Alternativ kann vorgesehen sein, daß das Flachbandkabel auf der den Anlageflächen zugewandten Seite mindestens zum Teil mit einem Schlaufenband versehen ist und die Anlagefläche des Deckelelements und/oder die dachfeste Anlagefläche mindestens zum Teil mit einem Hakenband versehen ist, wobei die Anbringung von Schlaufenband und Hakenband vertauscht werden kann, so daß in jedem Falle durch Schlaufen- und Hakenband eine Klettverbindung gebildet wird. Diese Maßnahmen verbessern die Anlage des Flachbandkabels an den Anlageflächen.

Außerdem besteht eine bevorzugte Ausgestaltung der Erfindung darin, daß in das Flachbandkabel ein Stahlband nach Art eines flexiblen Maßbandes eingearbeitet ist. Dies erhöht die Kabelsteifigkeit und verbessert ebenfalls die Anlage des Flachbandkabels an den Anlageflächen.

Im folgenden sind Ausführungsformen der Erfindung anhand der beiliegenden Zeichnungen näher erläutert. Es zeigen:
- FIG. 1: eine Seitenansicht eines erfindungsgemäßen Fahrzeugdaches in Schließstellung des Deckels;
- FIG. 2: eine Ansicht wie FIG. 1, jedoch bei ausgestelltem Deckel;
- FIG. 3: eine Ansicht wie FIG. 1, jedoch bei zurückgeschobenem Deckel;
- FIG. 4: einen Querschnitt im Randbereich der Dachöffnung entlang der Linie IV-IV von FIG. 1;
- FIG. 5: eine schematische Ansicht ähnlich zu FIG. 4, jedoch einer anderen Ausführungsform der Erfindung; und
- FIG. 6: eine Ansicht wie FIG. 5, jedoch einer dritten Ausführungsform der Erfindung.

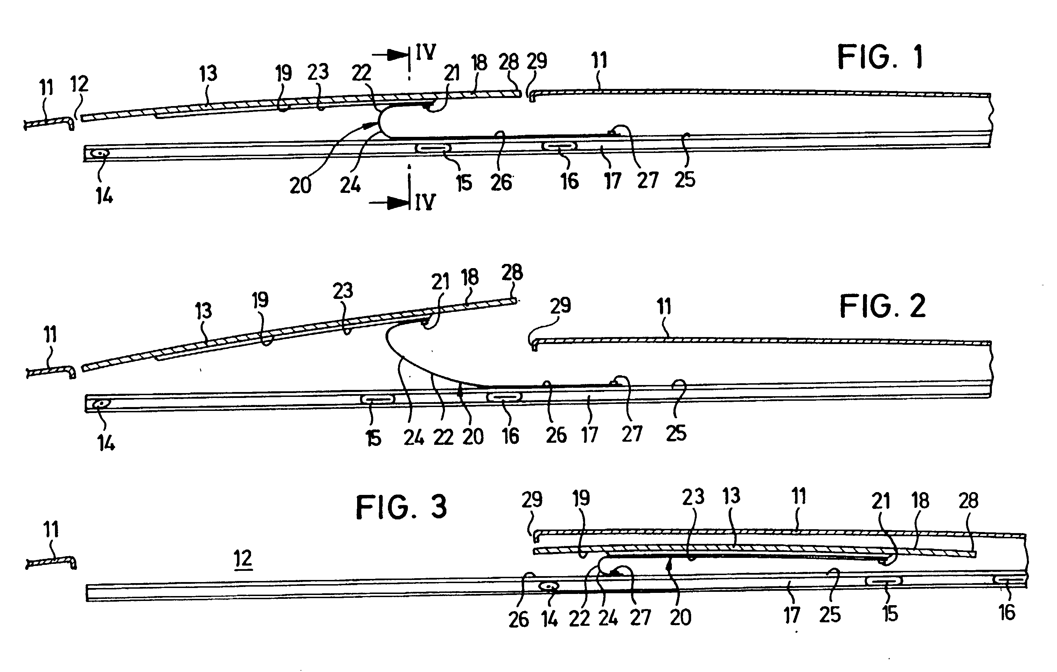

Unter Bezugnahme auf FIG. 1 weist eine feste Dachfläche 11 ein Dachöffnung 12 auf, die von einem Deckel 13 verschlossen ist. Der Deckel 13 ist mittels drei Gleitschuhen 14, 15 16, die in eine an einem dachfesten Rahmen 25 angebrachte Führungsschiene 17 eingreifen, in Dachlängsrichtung verschiebbar geführt. Ferner ist eine an sich bekannte, nicht dargestellte Ausstellmechanik vorzugsweise zwischen den Gleitschuhen 15 und 16 vorgesehen, die den Deckel 13, der an dem vorderen Gleitschuh 14 schwenkbar gelagert ist, in eine in FIG. 2 gezeigte Ausstell- Stellung bringen kann. Ferner kann der Deckel 13 ausgehend von der in FIG. 1 gezeigten Schließstellung in eine in FIG. 3 gezeigte Öffnungsstellung gebracht werden, in welcher der Deckel 13 unter die feste Dachfläche 11 zurückgeschoben ist, so daß er die Dachöffnung 12 zumindest teilweise freilegt. Im hinteren Abschnitt 18 des Deckels 13 ist an der Deckelunterseite 19 ein Ende eines flexiblen, biegeelastischen Flachbandkabels 20 an einer mit 21 bezeichneten Stelle befestigt.

Das Flachbandkabel 20 stellt eine elektrische Verbindung zwischen dem Deckel 13 und dem übrigen Fahrzeug bzw. dem Rahmen 25 her. Eine solche elektrische Verbindung ist beispielsweise nötig, um ein Signal eines an dem Deckel angebrachten Sensors, beispielsweise eines als Einklemmschutz an der Deckelvorderkante angebrachten Drucksensors, weiterzuleiten oder einen auf dem Deckel 13 angebrachten Solargenerator mit der Fahrzeugelektronik zu verbinden.

Von der Befestigungsstelle 21 aus verläuft das Flachbandkabel 20 zunächst nach vorn, wobei es mit seiner Breitseite 22 zunächst an einer an der Deckelunterseite 19 vorgesehenen Anlagefläche 23 anliegt. In einem Abstand von der Befestigungsstelle 21 ist das Flachbandkabel 20 in einem gekrümmten Bereich 24 U-förmig in Art einer Schleife nach hinten umgebogen. Nach dem gekrümmten Bereich liegt das Flachbandkabel 20 mit seiner Breitseite 22 an einer an dem dachfesten Rahmen 25 vorgesehenen Anlagefläche 26 an. Am Ende dieses Bereichs ist das Flachbandkabel 20 an einer mit 27 bezeichneten Stelle an dem dachfesten Rahmen 25 befestigt. Das Flachbandkabel 20 ist so ausgerichtet, daß es zwischen den Befestigungsstellen 21 und 27 in seiner Querrichtung im wesentlichen planar verläuft, d.h. das Flachbandkabel 20 ist zwischen den Befestigungsstellen 25 und 27 nicht verdrillt, wobei es bezüglich seiner Querrichtung im wesentlichen parallel zur Ebene der festen Dachfläche 11 ausgerichtet ist. Die rahmenfeste Befestigungsstelle 27 liegt bei geschlossenem Deckel (FIG. 1) hinter der deckelfesten Befestigungsstelle 21.

Bei der in FIG. 2 gezeigten Ausstell- Stellung des Deckels 13 ist die Deckelhinterkante 28 über den hinteren Rand 29 der Dachöffnung 12 angehoben, wodurch die Befestigungsstelle 21 bezüglich der Befestigungsstelle 27 verlagert wurde. Das Flachbandkabel 20 reagiert darauf so, daß sich der gekrümmte Bereich 24 auf Kosten der an den Anlageflächen 23 bzw. 26 anliegenden Abschnitte des Flachbandkabels 20 vergrößert, wobei der Krümmungsradius des gekrümmten Bereichs 24 zunimmt.

Bei der in FIG. 3 gezeigten Öffnungsstellung ist der Deckel 13 unter die feste Dachfläche 11 zurückgeschoben. In dieser Stellung liegt die deckelfeste Befestigungsstelle 21 hinter der rahmenfesten Befestigungsstelle 27. Der Krümmungsradius des gekrümmten Bereichs 24 ist ähnlich wie bei der Schließstellung in FIG. 1. Der an der deckelfesten Anlagefläche 23 anliegende Abschnitt der Flachbandkabels 20 nimmt in der Öffnungsstellung den größten Teil der Länge des Flachbandkabels 20 zwischen den Befestigungsstellen 21 und 27 ein, während der an der rahmenfesten Anlagefläche 26 anliegende Teil des Flachbandkabels seine minimale Länge einnimmt.

Der Deckel 13 wird zweckmäßig in an sich bekannter Weise von einem elektrischen Antrieb über drucksteife Antriebskabel verstellt. Es kann aber auch ein manueller Antrieb vorgesehen sein.

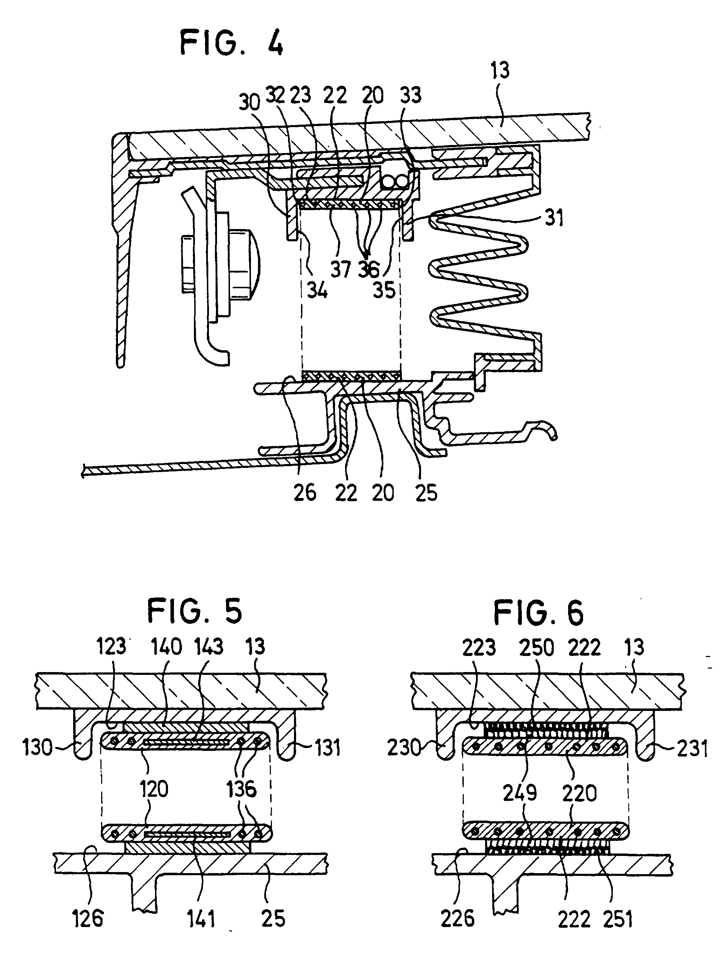

FIG. 4 zeigt einen Teilquerschnitt durch den Randbereich des Daches in der Schließstellung gemäß FIG. 1. Von der deckelfesten Anlagefläche 23 stehen nach unten zwei im wesentlichen senkrechte Stege 30, 31 ab, wobei das Flachbandkabel 20 zwischen diesen beiden Stegen 30, 31 in Querrichtung durch seitliche Anlage, d.h. Anlage der Seitenkanten 32 bzw. 33 des Flachbandkabels 20 an den Innenseiten 34 bzw. 35 der Stege 30 bzw. 31, geführt ist. Das Flachbandkabel 20 besteht aus mehreren Stromzuführungen 36 und einem isolierenden Träger 37. Das Material des Trägers 37 und die Breite des Flachbandkabels 20 sind vorzugsweise so ausgewählt, daß die Biegesteifigkeit des Flachbandkabels 20 hoch genug ist, um ein Durchhängen des Flachbandkabels 20 zwischen den Befestigungsstellen 21 und 27 zu vermeiden. In diesem Fall kann auf zusätzliche Sicherungsmaßnahmen verzichtet werden. Die seitliche Führung mittels der Stege 30, 31 ist ebenfalls optional, falls das Flachbandkabel 20 in der speziellen Konfiguration, d.h. bei vorgegebener Anordnung der Befestigungsstellen 21 und 27 eine hinreichende Rückstellkraft bezüglich einer seitlichen Auslenkung, d.h. einer Auslenkung in Querrichtung, aufweist. In der Praxis wurden gute Ergebnisse mit einem handelsüblichen Flachbandkabel mit dem Trägermaterial aus PVC und einer Breite von etwa 13 mm erzielt.

Die Steifigkeit des Flachbandkabels 20 kann gegebenenfalls dadurch erhöht werden, daß ein Band aus einem anderen Material eingearbeitet wird, beispielsweise ein federndes Stahlband, wie es von flexiblen Maßbändern bekannt ist.

FIG. 5 zeigt eine alternative Ausführungsform eines Flachbandkabels und der entsprechenden Anlageflächen. Eine deckelfeste Anlagefläche 123 und eine rahmenfeste Anlagefläche 126 sind jeweils, zumindest über einen Teilabschnitt der Anlagefläche 123 bzw. 126, mit einer permanentmagnetischen Folie 140 bzw. 141 versehen. Die deckelfeste Anlagefläche 123 ist ferner mit einer Seitenführung in Form von zwei Stegen 130 bzw. 131 versehen. In ein Flachbandkabel 120 ist in seinem Mittelbereich 142 ein Stahlband 143 eingearbeitet, welches aufgrund seiner magnetischen Eigenschaft von der permanentmagnetischen Folie 140 bzw. 141 angezogen und somit zur lösbaren Anlage an den Anlageflächen 123 bzw. 126 gebracht wird. Ferner dient das Stahlband 143 zur Erhöhung der Steifigkeit des Flachbandkabels 120. Die Magnetfolie 140 bzw. 141 erstreckt sich nicht zwangsweise über die gesamte Breite des Flachbandkabels 120. Mehrere Stromzuführungen 136 sind jeweils im seitlichen Randbereich des Flachbandkabels 120 vorgesehen.

Umgekehrt können die Anlageflächen mit magnetischem Material versehen sein oder ganz aus solchem bestehen, während das Flachbandkabel permanentmagnetisches Material enthält. Ferner ist es auch möglich, daß nicht an beiden Anlageflächen magnetische Halterungskräfte nötig sind, so daß nur eine Anlagefläche magnetisierbar ist bzw. permanentmagnetisches Material enthält.

In FIG. 6 ist eine weitere alternative Ausführungsform eines Flachbandkabels und der entsprechenden Anlageflächen dargestellt. Ein Flachbandkabel 220 ist dabei an seiner Oberseite 222 mit einem Hakenband 249 versehen, während eine deckelfeste Anlagefläche 223 und eine rahmenfeste Anlagefläche 226 jeweils mit einem Schlaufenband 250 bzw. 251 versehen sind. Die Schlaufenbänder 250, 251 und das Hakenband 249 bilden bei Anlage aneinander einen leicht lösbaren sogenannten Klettverschluß, wodurch das Flachbandkabel 220 an den Anlageflächen 223 bzw. 226 gehalten wird. Die deckelfeste Anlagefläche 223 ist mit einer seitlichen Führung für das Flachbandkabel 220 in Form von zwei Stegen 230, 231 versehen.

Alternativ können das Flachbandkabel mit einem Schlaufenband und die Anlageflächen jeweils mit einem Hakenband versehen sein. Es kann auch ausreichend sein, daß eine Haftwirkung nur an einer der Anlageflächen vorgesehen ist, so daß nur eine Anlagefläche mit einem Schlaufenband bzw. Hakenband versehen ist.

Um die Geräuschentwicklung zu verringern bzw. zu verhindern, kann das Flachbandkabel mit einem weichen Material, z.B. Gummi, umspritzt sein oder aus einem weichen Trägermaterial bestehen.

Obschon die Erfindung bisher in Bezug auf ein Schiebe/Hebe-Dach beschrieben wurde, kann sie auch bei allen anderen Dachtypen mit mindestens einem verstellbaren Deckel oder Deckelteil eingesetzt werden. Insbesondere ist die Erfindung nicht auf Fahrzeugdächer mit einem einzelnen festen Deckelelement beschränkt, sondern kann auch bei Lamellendächern, Faltdächern und Dächern mit mehreren separaten Deckeln verwendet werden.

Die Kontaktierung zwischen Deckel und festem Fahrzeugdach kann sowohl der Energieübertragung, beispielsweise von Solarzellen auf einen Lüfter und/oder die Fahrzeugbatterie, oder einer Signalübertragung, beispielsweise von einem Einklemmschutzsensor zu einem Steuergerät des Deckels, dienen.

### Bezugszeichenliste

- feste Dachfläche: **11**
- Dachöffnung: **12**
- Deckel: **13**
- Schlitten: **14, 15, 16**
- Führungsschiene: **17**
- hinterer Teil von 13: **18**
- Deckelunterseite: **19**
- Flachbandkabel: **20, 120, 220**
- Befestigungsstelle an 13: **21**
- Breitseite von 20, 220: **22, 222**
- deckelfeste Anlagefläche: **23, 123, 223**
- gekrümmter Bereich von 20: **24**
- dachfester Rahmen: **25**
- dachfeste Anlagefläche: **26, 126, 226**
- Befestigungsstelle an 25: **27**
- Hinterkante von 13: **28**
- Hinterkante von 12: **29**
- Stege: **30, 31, 130, 131, 230, 231**
- Seitenkanten: **32, 33**
- Innenseiten von 30, 31: **34, 35**
- Stromzuführungen: **36, 136**
- Träger: **37**

- Magnetfolie: **140, 141**
- Stahlband: **143**

- Hakenband: **249**
- Schlaufenband: **250, 251**

## Patentansprüche

1. Fahrzeugdach mit einem verstellbaren Deckelelement (13), welches eine in einer festen Dachfläche (11) ausgebildete Dachöffnung (12) verschließen oder wahlweise mindestens zum Teil freigeben kann, wobei eine elektrische Kabelverbindung (20, 120, 220) zwischen Deckelelement und der festen Dachfläche vorgesehen ist und die Kabelverbindung an einer Stelle (21) an dem Deckelelement befestigt ist und an einer anderen Stelle (27) dachfest befestigt ist, wobei das Kabel in seiner Längsrichtung zwischen den Befestigungsstellen gebogen ist, **dadurch gekennzeichnet, dass** die Kabelverbindung als Flachbandkabel (20, 120, 220) ausgebildet ist, das in seiner Längsrichtung in der Seitenansicht U-förmig gebogen ist und in seiner Querrichtung zwischen den Befestigungsstellen im wesentlichen planar verläuft, und dass das Flachbandkabel bei einer Verstellung des Deckelelements (13) einerseits an einer an dem Deckelelement vorgesehenen Anlagefläche (23, 123, 223) und andererseits an einer dachfesten Anlagefläche (26, 126, 226) abrollt.

2. Fahrzeugdach nach Anspruch 1, **dadurch gekennzeichnet, daß** das Flachbandkabel (20, 120, 220) entlang der Anlagefläche (23, 123, 223) des Deckelelements (13) und/oder der dachfesten Anlagefläche in Querrichtung geführt ist.

3. Fahrzeugdach nach Anspruch 2, **dadurch gekennzeichnet, daß** das Flachbandkabel (20, 120, 220) durch seitliche Anlage an jeweils einem von der Anlagefläche (23, 123, 223) abstehenden Steg (30, 31, 130, 131, 230, 231) geführt ist.

4. Fahrzeugdach nach einem der vorhergehenden Ansprüche, **dadurch gekennzeichnet, daß** das Flachbandkabel (20, 120, 220) mit einem weichen Material umspritzt ist oder aus einem weichen Trägermaterial (37) besteht.

5. Fahrzeugdach nach einem der vorhergehenden Ansprüche, **dadurch gekennzeichnet, daß** in das Flachbandkabel (120) ferromagnetisches Material (143) eingearbeitet ist und Magnete oder Magnetfolien an der Anlagefläche (123) des Deckelelements (13) und/oder der dachfesten Anlagefläche (126) angebracht sind.

6. Fahrzeugdach nach einem der Ansprüche 1 bis 4, **dadurch gekennzeichnet, daß** die Anlagefläche des Deckelelements (13) und/oder die dachfeste Anlagefläche ferromagnetisches Material enthält und in das Flachbandkabel Magnete oder eine Magnetfolie eingearbeitet sind.

7. Fahrzeugdach nach einem der Ansprüche 1 bis 4, **dadurch gekennzeichnet, daß** das Flachbandkabel (220) auf der den Anlageflächen (223, 226) zugewandten Seite (222) mindestens zum Teil mit einem Hakenband (249) versehen ist und die Anlagefläche des Deckelelements und/oder die dachfeste Anlagefläche mindestens zum Teil mit einem Schlaufenband (250, 251) versehen ist.

8. Fahrzeugdach nach einem der Ansprüche 1 bis 4, **dadurch gekennzeichnet, daß** das Flachbandkabel auf der den Anlageflächen zugewandten Seite mindestens zum Teil mit einem Schlaufenband versehen ist und die Anlagefläche des Deckelelements (13) und/oder die dachfeste Anlagefläche mindestens zum Teil mit einem Hakenband versehen ist.

9. Fahrzeugdach nach einem der vorhergehenden Ansprüche, **dadurch gekennzeichnet, daß** in das Flachbandkabel (120) ein Stahlband (143) eingearbeitet ist.

## Claims

1. A vehicle roof with a displaceable cover element (13) which can close or optionally at least partially expose a roof aperture (12) constructed in a fixed roof surface (11), an electrical cable connection (20, 120, 220) between cover element and fixed roof surface being provided and the cable connection being fixed on the cover element at a location (21) and being rigid with the roof at another location (27), whereby the cable is in its longitudinal direction bent between the fixing locations, **characterised in that** the cable connection is constructed as a flat strip cable (20, 120, 220) which is bent in its longitudinal direction to a U-shape in side elevation while in its transverse direction it extends substantially planar between the fixing locations and **in that** the flat strip cable, upon a displacement of the cover element (13), rolls on the one hand on a bearing surface (23, 123, 223) provided on the cover element and on the other on a bearing surface (26, 126, 226) which is part of the roof.

2. A vehicle roof according to claim 1, **characterised in that** the flat strip cable (20, 120, 220) is guided in a transverse direction along the bearing surface (23, 123, 223) of the cover element (13) and/or of the bearing surface which is part of the roof.

3. A vehicle roof according to claim 2, **characterised in that** the flat strip cable (20, 120, 220) is guided by lateral bearing on, in each case, a web (30, 31, 130, 131, 230, 231) projecting from the bearing surface (23, 123, 223).

4. A vehicle roof according to one of the preceding claims, **characterised in that** the flat strip cable (20, 120, 220) has a soft material injected around it or consists of a soft carrier material (37).

5. A vehicle roof according to one of the preceding claims, **characterised in that** ferromagnetic material (143) is incorporated into the flat strip cable (120) and **in that** magnets or magnetic films are provided on the bearing surface (123) of the cover element (13) and/or the bearing surface (126) which is part of the roof.

6. A vehicle roof according to one of claims 1 to 4, **characterised in that** the bearing surface of the cover element (13) and/or the bearing surface rigid with the roof contains ferromagnetic material and **in that** magnets or a magnetic film is incorporated into the flat strip cable.

7. A vehicle roof according to one of claims 1 to 4, **characterised in that** the flat strip cable (220) is on the side (222) facing the bearing surfaces (223, 226) provided at least partly with a hooked strip (249) and **in that** the bearing surface of the cover element and/or the bearing surface which is part of the roof is at least provided partly with a loop strip (250, 251).

8. A vehicle roof according to one of claims 1 to 4, **characterised in that** on the side facing the bearing surfaces, the flat strip cable is at least partially provided with a loop strip while the bearing surface of the cover element (13) and/or the bearing surface which is part of the roof is at least partially provided with a hook strip.

9. A vehicle roof according to one of the preceding claims, **characterised in that** a steel strip (143) is incorporated into the flat strip cable (120).

## Revendications

1. Toit de véhicule avec un élément de fermeture mobile (13) qui peut soit fermer une ouverture (12) réalisée dans une surface de toit fixe (11), soit la dégager au moins en partie, une liaison par câble électrique (20, 120, 220) étant prévue entre l'élément de fermeture et la surface de toit fixe et la liaison par câble étant fixée en un point (21) à l'élément de fermeture et en un autre point (27) à demeure au toit, sachant que le câble est courbé entre les points de fixation dans sa direction longitudinale, **caractérisé en ce que** la liaison par câble est assurée par un câble en ruban (20, 120, 220) qui est plié en U dans sa direction longitudinale vu de côté et qui s'étend dans sa direction transversale de façon essentiellement plane entre les points de fixation, et **en ce que**, lors d'un déplacement de l'élément de fermeture (13), le câble en ruban roule en prenant appui, d'une part, sur une surface de guidage (23, 123, 223) prévue sur l'élément de fermeture et, d'autre part, sur une surface de guidage (26, 126, 226) fixe du toit.

2. Toit de véhicule selon la revendication 1, **caractérisé en ce que** le câble en ruban (20, 120, 220) est guidé le long de la surface de guidage (23, 123, 223) de l'élément de fermeture (13) et/ou de la surface de guidage fixe du toit dans la direction transversale.

3. Toit de véhicule selon la revendication 2, **caractérisé en ce que** le câble en ruban (20, 120, 220) est guidé par application latérale contre une entretoise (30, 31, 130, 131, 230, 231) faisant chaque fois saillie de la surface de guidage (23, 123, 223).

4. Toit de véhicule selon l'une des revendications précédentes, **caractérisé en ce que** le câble en ruban (20, 120, 220) est entouré par projection d'un matériau souple ou est composé d'un matériau de support souple (37).

5. Toit de véhicule selon l'une des revendications précédentes, **caractérisé en ce qu'**un matériau ferromagnétique (143) est incorporé dans le câble en ruban (120) et **en ce que** des aimants ou des films magnétiques sont fixés sur la surface de guidage (123) de l'élément de fermeture (13) et/ou sur la surface de guidage (126) fixe du toit.

6. Toit de véhicule selon l'une des revendications 1 à 4, **caractérisé en ce que** la surface de guidage de l'élément de fermeture (13) et/ou la surface de guidage fixe du toit contient un matériau ferromagnétique et **en ce que** des aimants ou un film magnétique sont incorporés dans le câble en ruban.

7. Toit de véhicule selon l'une des revendications 1 à 4, **caractérisé en ce que** le câble en ruban (220) est muni sur le côté (222) tourné vers les surfaces de guidage (223, 226), au moins partiellement, d'un ruban à crochets (249), et **en ce que** la surface de guidage de l'élément de fermeture et/ou la surface de guidage fixe du toit est munie, au moins en partie, d'un ruban à boucles (250, 251).

8. Toit de véhicule selon l'une des revendications 1 à 4, **caractérisé en ce que** le câble en ruban est muni, sur le côté tourné vers les surfaces de guidage, au moins en partie, d'un ruban à boucles et **en ce que** la surface de guidage de l'élément de fermeture (13) et/ou la surface de guidage fixe du toit est munie, au moins en partie, d'un ruban à crochets.

9. Toit de véhicule selon l'une des revendications précédentes, **caractérisé en ce qu'**un ruban d'acier (143) est incorporé dans le câble en ruban (120).
